(19) Europäisches Patentamt
European Patent Office
Office européen des brevets

(11) **EP 2 783 814 A2**

(12) **EUROPEAN PATENT APPLICATION**

(43) Date of publication:
**01.10.2014 Bulletin 2014/40**

(51) Int Cl.:
***B25J 9/16*** (2006.01)

(21) Application number: **14160188.0**

(22) Date of filing: **17.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.03.2013 JP 2013056635**

(71) Applicant: **Kabushiki Kaisha Yaskawa Denki
Kitakyushu-shi, Fukuoka 806-0004 (JP)**

(72) Inventors:
• **Ikenaga, Takahisa
Kitakyushu-shi, Fukuoka 806-0004 (JP)**

• **Nagasaki, Takashi
Kitakyushu-shi, Fukuoka 806-0004 (JP)**
• **Murayama, Takuya
Kitakyushu-shi, Fukuoka 806-0004 (JP)**
• **Ichimaru, Yuji
Kitakyushu-shi, Fukuoka 806-0004 (JP)**

(74) Representative: **Viering, Jentschura & Partner
Patent- und Rechtsanwälte
Grillparzerstrasse 14
81675 München (DE)**

(54) **Robot system and calibration method**

(57)     A robot system (1, 1A) includes: a robot arm (10); a camera (40); a calibration jig (70, 71) with a marker (70c) that allows image recognition; and a calibration apparatus (U1, U2) configured to derive a correlation between camera coordinates being coordinates in a photographed image and robot coordinates using the robot arm as a reference. The robot arm is configured to have a posture corresponding to a relative position of the camera with respect to the marker. The calibration apparatus sets a plurality of photographing positions by changing the relative position, acquires the camera coordinates of the marker in the plurality of photographing positions and information of the posture of the robot arm, and derives the correlation.

FIG. 1

**Description**

BACKGROUND

1. TECHNICAL FIELD

This disclosure relates to a robot system and a calibration method.

2. RELATED ART

A robot system in practical use photographs a workpiece with a camera, acquires position and posture information and other information of the workpiece based on the photographed image, and causes a robot arm to perform work based on the acquired position and posture information and other information. For example, JP-A-2010-243317 discloses a robot system that includes a robot arm and a camera that is mounted on the robot arm for photographing a workpiece.

In the above-described robot system, to acquire the position and information and so on of the workpiece based on the image photographed by the camera, a correlation between camera coordinates and robot coordinates is derived in advance. The camera coordinates are coordinates in the image photographed by the camera. The robot coordinates are coordinates using the robot arm as a reference. Accordingly, the camera coordinates and the robot coordinates are acquired at a plurality of points and these coordinates are used to derive the above-described correlation. This method performs both a work for acquiring camera coordinates in the respective points and a work for acquiring robot coordinates in the respective points. Accordingly, the work becomes complicated and the work time becomes long. Especially, for acquiring the robot coordinates, a complicated work is performed. For example, the robot arm is manually operated to instruct the above-described respective points.

One object of this disclosure is to provide a robot system and a calibration method that readily and quickly derive a correlation between camera coordinates and robot coordinates.

SUMMARY

A robot system according to one embodiment of the present disclosure includes: a robot arm; a camera configured to photograph a workpiece; a calibration jig with a marker that allows image recognition; and a calibration apparatus configured to derive a correlation between camera coordinates and robot coordinates, the camera coordinates being coordinates in an image photographed by the camera, the robot coordinates being coordinates using the robot arm as a reference. The robot arm is configured to have a posture corresponding to a relative position of the camera with respect to the marker. The calibration apparatus includes: an arm controller configured to control the robot arm to change the relative position of the camera with respect to the marker, so as to set a plurality of photographing positions; a camera-coordinate acquirer configured to acquire the camera coordinates of the marker to be obtained by photographing in the plurality of photographing positions; a posture-information acquirer configured to acquire information of the posture of the robot arm when the marker is photographed by the camera in the plurality of photographing positions; and a correlation derivation unit configured to derive the correlation between the camera coordinates and the robot coordinates based on the camera coordinates acquired by the camera-coordinate acquirer and the posture information acquired by the posture-information acquirer.

BRIEF DESCRIPTION OF THE DRAWINGS

Fig. 1 is a pattern diagram illustrating a schematic configuration of a robot system according to a first embodiment;
Fig. 2 is a plan view of a calibration jig in Fig. 1;
Fig. 3 is a block diagram illustrating a functional configuration of a calibration apparatus in Fig. 1;
Fig. 4 is a plan view illustrating a marker arranged in three photographing positions;
Fig. 5 is a flowchart illustrating a calibration procedure of the robot system according to the first embodiment;
Fig. 6 is a flowchart illustrating a procedure for performing calibration again in the robot system according to the first embodiment;
Fig. 7 is a pattern diagram illustrating a schematic configuration of a robot system of a comparison target;
Fig. 8 is a plan view of a first calibration jig in Fig. 7;
Fig. 9 is a flowchart illustrating a calibration procedure of the robot system of the comparison target;
Fig. 10 is a flowchart illustrating a procedure for performing calibration again in the robot system of the comparison target;

Fig. 11 is a pattern diagram illustrating a schematic configuration of a robot system according to a second embodiment;

Fig. 12 is a block diagram illustrating a functional configuration of a calibration apparatus in Fig. 11;

Fig. 13 is a plan view illustrating a camera arranged in three photographing positions; and

Fig. 14 is a flowchart illustrating a calibration procedure of the robot system according to the second embodiment.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A robot system according to one embodiment of the present disclosure (this robot system) includes: a robot arm; a camera configured to photograph a workpiece; a calibration jig with a marker that allows image recognition; and a calibration apparatus configured to derive a correlation between camera coordinates and robot coordinates, the camera coordinates being coordinates in an image photographed by the camera, the robot coordinates being coordinates using the robot arm as a reference. The robot arm is configured to have a posture corresponding to a relative position of the camera with respect to the marker. The calibration apparatus includes: an arm controller configured to control the robot arm to change the relative position of the camera with respect to the marker, so as to set a plurality of photographing positions; a camera-coordinate acquirer configured to acquire the camera coordinates of the marker to be obtained by photographing in the plurality of photographing positions; a posture-information acquirer configured to acquire information of the posture of the robot arm when the marker is photographed by the camera in the plurality of photographing positions; and a correlation derivation unit configured to derive the correlation between the camera coordinates and the robot coordinates based on the camera coordinates acquired by the camera-coordinate acquirer and the posture information acquired by the posture-information acquirer.

In This robot system the calibration jig may be mounted on a tip portion of the robot arm. In this case, the arm controller is configured to control the robot arm to move the marker to a plurality of sample positions within a plane approximately perpendicular to an optical axis of the camera in a state where the marker faces the camera, so as to set the plurality of photographing positions.

In this robot system the camera may be mounted on the robot arm. In this case, the arm controller is configured to control the robot arm to move the camera to a plurality of sample positions within a plane approximately perpendicular to an optical axis of the camera in a state where the camera faces the marker, so as to set the plurality of photographing positions.

This robot system readily and quickly derives the correlation between the camera coordinates and the robot coordinates.

Hereinafter, a detailed description will be given of one embodiment of this disclosure with reference to the accompanying drawings. In the description, the element that is substantially the same or has substantially the same function will be provided with the same reference numeral, and the duplicated description will be omitted.

(First Embodiment)

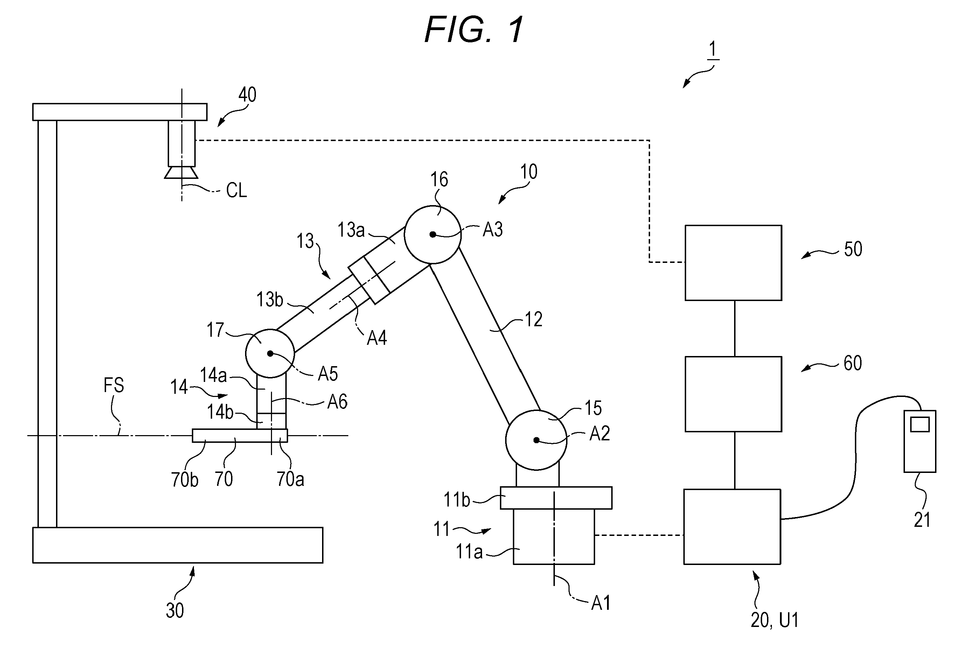

As illustrated in Fig. 1, a robot system 1 according to a first embodiment includes a robot arm 10, a robot controller 20, a workbench 30, a camera 40, a camera controller 50, a programmable logic controller (PLC) 60, and a calibration jig 70.

The robot arm 10 includes a base portion 11, two arm portions 12 and 13, one wrist portion 14, and three joints 15, 16, and 17. The respective joints 15, 16, and 17 couple the arm portion 12, the arm portion 13, and the wrist portion 14 in series to the base portion 11. The base portion 11 includes a base 11a mounted on a floor surface and a swivel base 11b disposed on the base 11a. The base 11a incorporates an actuator that turns the swivel base 11b around a perpendicular axis (the S-axis) A1.

The joint (the L-axis joint) 15 couples the arm portion (a lower arm portion) 12 and an upper part of the swivel base 11b together. The L-axis joint 15 incorporates an actuator that swings the lower arm portion 12 around a horizontal axis (the L-axis) A2. The joint (the U-axis joint) 16 couples the arm portion (a forearm portion) 13 and the lower arm portion 12 together. The U-axis joint 16 incorporates an actuator that swings the forearm portion 13 around an axis (the U-axis) A3 parallel to the L-axis A2. The joint (the B-axis joint) 17 couples the wrist portion 14 and the forearm portion 13 together. The B-axis joint 17 incorporates an actuator that swings the wrist portion 14 around an axis (the B-axis) A5 perpendicular to the central axis A4 of the forearm portion 13.

The forearm portion 13 includes forearm links 13a and 13b that continue in series. The first forearm link 13a at the U-axis joint 16 side incorporates an actuator that turns the second forearm link 13b at the B-axis joint 17 side around the central axis (the R-axis) A4 of the forearm portion 13. The wrist portion 14 includes a wrist link 14a and a mounting flange 14b. The wrist link 14a is coupled to the B-axis joint 17. The mounting flange 14b is coupled to the tip side of the wrist link 14a. The wrist link 14a incorporates an actuator that turns the mounting flange 14b around the central axis (the T-axis) A6 of the wrist portion 14. On the mounting flange 14b, various tools for performing desired works on the robot arm 10 are mounted. The configuration of the robot arm 10 and the arrangement of the respective actuators described above are one example. The configuration of the robot arm 10 and the arrangement of the respective actuators are not limited to the above-described configuration and arrangement.

The robot controller 20 controls the actuators of the robot arm 10 to cause the robot arm 10 to perform various works on a workpiece. The robot controller 20 couples to a programming pendant (PP) 21 through a cable. The PP 21 is an input unit for performing teaching of a motion of the robot arm 10 by the user.

The workbench 30 supports the workpiece as a working target of the robot arm 10. The camera 40 incorporates an imaging device such as a CCD. The camera 40 is mounted on the upper side of the workbench 30. The camera 40 photographs the workbench 30 on the lower side and outputs an image (image data) as an electrical signal.

The camera controller 50 performs a process that acquires an image from the camera 40 and recognizes an object within the image. This process allows obtaining, for example, the information of the position and the posture of the object in the image. The PLC 60 is coupled to the robot controller 20 and the camera 40 and hands over information between the robot controller 20 and the camera 40.

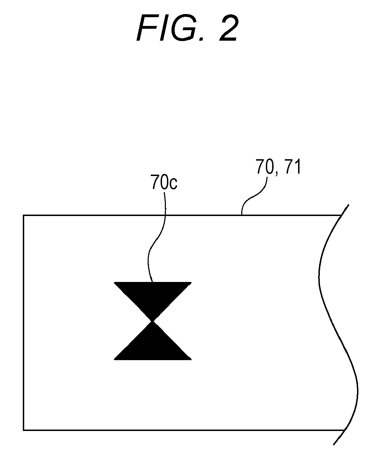

The calibration jig 70 includes a mounting portion 70a for mounting the calibration jig 70 on the mounting flange 14b and a flat plate portion 70b. The flat plate portion 70b projects out toward the peripheral area of the mounting flange 14b from the mounting portion 70a. The flat plate portion 70b has, at the mounting flange 14b side, a surface on which a marker 70c that allows image recognition is disposed (see Fig. 2).

The robot controller 20 specifies the position and the posture and so on of the workpiece as a working target based on the information acquired from the camera controller 50. The information acquired from the camera controller 50 includes the position and posture information and other information of the workpiece in the image photographed by the camera 40. Accordingly, to specify the position and the posture and so on of the workpiece using the robot arm 10 as a reference, a correlation between camera coordinates and robot coordinates is derived in advance. The camera coordinates are coordinates in the image photographed by the camera 40. The robot coordinates are coordinates using the robot arm 10 as a reference. The origin position of the robot coordinates and the posture are fixed unless the base 11a of the robot arm 10 moves. Hereinafter, the derivation of the correlation between the camera coordinates and the robot coordinates is referred to as "calibration". The reference of the robot coordinates may be any portion of the robot arm 10. In this embodiment, the reference of the robot coordinates is assumed to be, for example, a root portion of the robot arm 10.

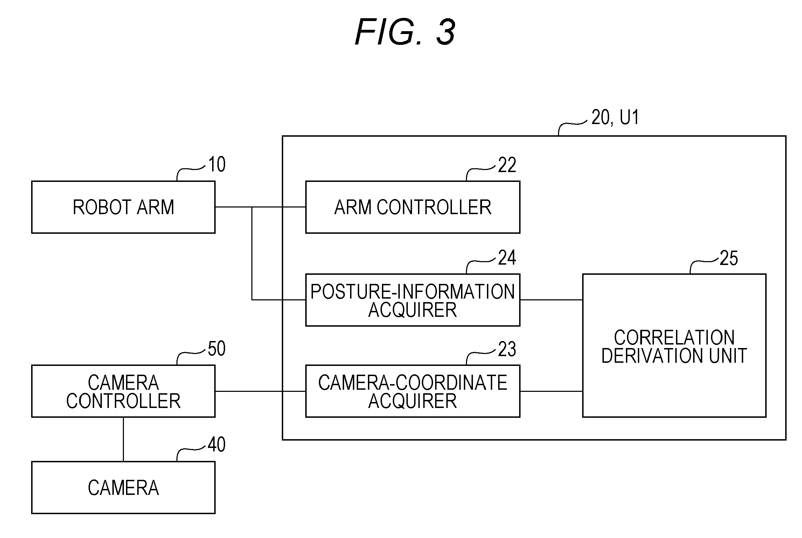

The calibration is executed by the robot controller 20 when the calibration jig 70 is mounted on the mounting flange 14b. That is, the robot controller 20 functions as a calibration apparatus U1. As illustrated in Fig. 3, the robot controller 20 as the calibration apparatus U1 includes, as function blocks, an arm controller 22, a camera-coordinate acquirer 23, a posture-information acquirer 24, and a correlation derivation unit 25.

The arm controller 22 controls the robot arm 10 as follows when the calibration jig 70 is mounted on the tip portion of the robot arm 10. That is, the arm controller 22 operates the robot arm 10 to move the marker 70c to a plurality of sample positions within a plane FS approximately perpendicular to an optical axis CL of the camera 40 in a state where the marker 70c faces the camera 40.

In this embodiment, the camera 40 photographs the marker 70c when the marker 70c is in the sample position. As described above, in this embodiment, there is a plurality of the sample positions of the marker 70c. Accordingly, there is also a plurality of photographing positions of the camera 40.

Here, the photographing position is a relative position of the camera 40 with respect to the marker 70c during photographing. In this embodiment, the camera 40 is fixed while the marker 70c can be moved. Accordingly, in this embodiment, the photographing position is determined corresponding to the sample position of the marker 70c.

The robot arm 10 changes its posture to move the marker 70c. Accordingly, the robot arm 10 takes a posture corresponding to the relative position of the camera 40 with respect to the marker 70c.

The arm controller 22 sets a plurality of photographing positions by controlling the robot arm 10 to change the relative position of the camera 40 with respect to the marker 70c. That is, in this embodiment, the arm controller 22 controls the robot arm 10 to move the marker 70c to the plurality of sample positions within the plane FS approximately perpendicular to the optical axis CL of the camera 40 in a state where the marker 70c faces the camera 40, thus setting the plurality of photographing positions.

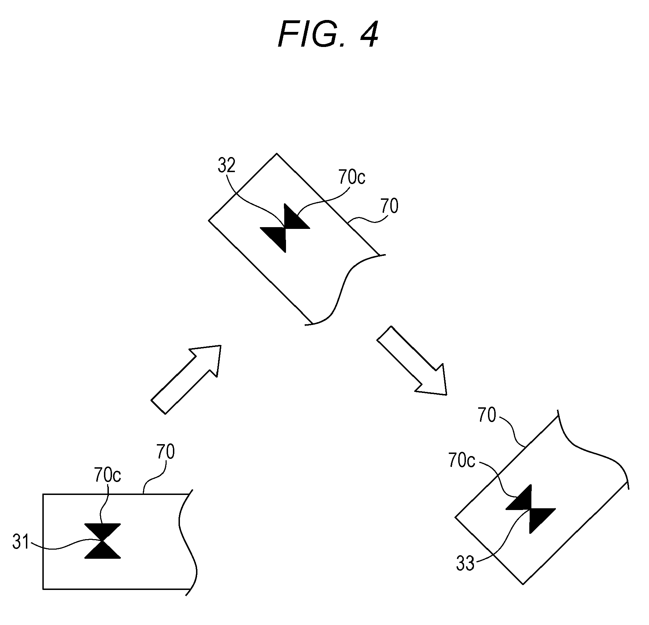

As illustrated in Fig. 4, the arm controller 22 employs, for example, three points 31, 32, and 33 that are not arranged in a straight line as the sample positions.

Additionally, the arm controller 22 controls the robot arm 10 to change the direction of the calibration jig along a rotation direction around an axis approximately parallel to the optical axis CL. For example, the arm controller 22 changes the direction of the calibration jig 70 for each sample position when the marker 70c is in the sample positions 31, 32, and 33. Accordingly, the correlation between the camera coordinates and the robot coordinates can be derived with higher accuracy. Here, the number of the sample positions is not limited to three. As the number of the sample positions is increased, calculation accuracy of the correlation between the camera coordinates and the robot coordinates is increased while a time required for the calibration becomes longer.

The camera-coordinate acquirer 23 acquires the camera coordinates of the marker 70c obtained by photographing in the plurality of photographing positions. That is, the camera-coordinate acquirer 23 requests execution of image processing in the camera controller 50 when the marker 70c is in the sample positions 31, 32, and 33. The camera controller 50 acquires the images when the marker 70c is in the sample positions 31, 32, and 33 from the camera 40 and recognizes the position (coordinates) of the marker 70c in this image with image processing. Accordingly, the camera coordinates of the marker 70c are obtained. The camera-coordinate acquirer 23 acquires the camera coordinates obtained by the camera controller 50.

The posture-information acquirer 24 acquires the information (the posture information) of the posture of the robot arm 10 when the marker 70c is photographed by the camera 40 in the plurality of photographing positions. That is, the posture-information acquirer 24 acquires the posture information of the robot arm 10 when the marker 70c is in the sample positions 31, 32, and 33. Specifically, the angle information of the respective actuators of the robot arm 10 is acquired.

The correlation derivation unit 25 derives the correlation between the camera coordinates and the robot coordinates based on the camera coordinates acquired by the camera-coordinate acquirer 23 and the posture information acquired by the posture-information acquirer 24. The calculation content will be described below. Here, a correlation between a movement distance of the marker 70c in the image photographed by the camera 40 and an actual movement distance of the marker 70c is assumed to be known. The correlation between the camera coordinates and the robot coordinates is expressed by the following formula.

$$P = Pc + Rc \bullet cP \ldots (1)$$

P: robot coordinates.
Pc: robot coordinates of the camera coordinate origin.
Rc: a rotation transformation matrix from the camera coordinates into the robot coordinates.
cP: camera coordinates.

Deriving the correlation between the camera coordinates and the robot coordinates corresponds to calculation of Pc and Rc in the formula (1). When the marker 70c is in any sample position "i", the robot coordinates of the marker 70c satisfies the following formula.

$$Pmi = Pfi + Rfi \bullet fPm \ldots (2)$$

Pmi: robot coordinates of the marker 70c when the marker 70c is in the position "i".
fPm: flange coordinates of the marker 70c (coordinates using the mounting flange 14b as a reference).
Pfi: robot coordinates of the flange coordinate origin when the marker 70c is in the position "i".
Rfi: a rotation transformation matrix from the flange coordinates into the robot coordinates when the marker 70c is in the position "i".

Based on the formulas (1) and (2), the following equation using Pc, Rc, and fPm as unknown numbers is satisfied.

$$Pc + Rc \bullet cPmi = Pfi + Rfi \bullet fPm \ldots (3)$$

cPmi: the camera coordinates of the marker 70c when the marker 70c is in the position "i".

The marker 70c is photographed in the three sample positions 31, 32, and 33 and the parameters obtained by the photographing are assigned to the formula (3), so as to configure the following three simultaneous equations.

$$Pc + Rc \bullet cP31 = Pf31 + Rf31 \bullet fPm \ldots (4)$$

$$Pc + Rc \bullet cP32 = Pf32 + Rf32 \bullet fPm \ldots (5)$$

$$Pc + Rc \bullet cP33 = Pf33 + Rf33 \bullet fPm \ldots (6)$$

With solution of this simultaneous equation, Pc, Rc and fPm are calculated.

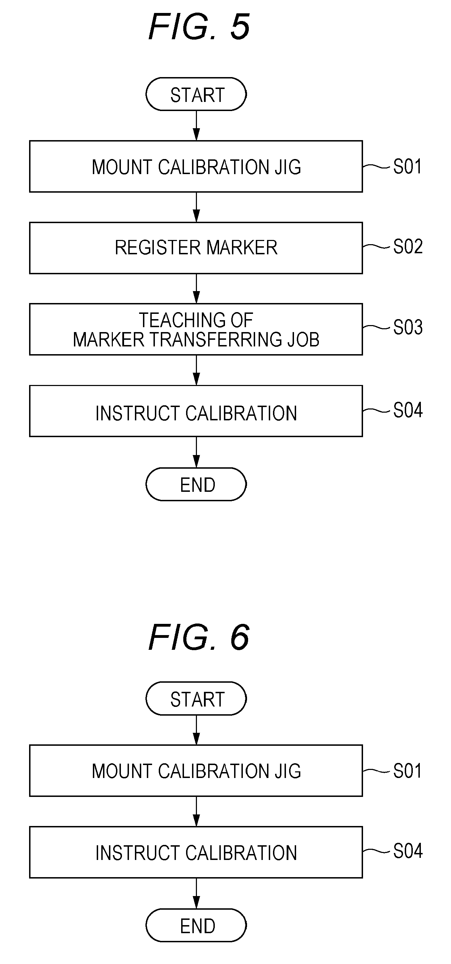

Next, a calibration method of the robot system 1 will be described. The calibration is performed using the robot controller 20 as the calibration apparatus U1. As illustrated in Fig. 5, firstly, the user mounts the calibration jig 70 on the mounting flange 14b of the robot arm 10 (in S01).

Subsequently, the user uses the PP 21 to register the marker 70c (in S02). That is, the parameters for the image recognition regarding the marker 70c are registered. The parameters for the image recognition are, for example, the shape and the size of the marker 70c. These parameters are, for example, stored (registered) on the camera controller 50.

Subsequently, the user uses the PP 21 to perform teaching of the marker transferring job (in S03). That is, the user sets a control target value when the arm controller 22 causes the robot arm 10 to perform an operation (a marker transferring job) that moves the marker 70c to the three sample positions 31, 32, and 33. This control target value is, for example, stored in the robot controller 20.

Subsequently, the user uses the PP 21 to instruct the robot controller 20 to execute the calibration (in S04). Accordingly, the robot controller 20 executes calibration. That is, the robot controller 20 (the correlation derivation unit 25) derives the correlation between the camera coordinates and the robot coordinates.

This correlation is used to transform the camera coordinates of the workpiece into the robot coordinates. Accordingly, the position and the posture and so on of the workpiece and similar parameter using the root portion of the robot arm as a reference are specified. As a result, various works on the workpiece can be performed by the robot arm. In the case where the position of the camera 40 is misaligned or similar case, the calibration is performed again. In this case, registration of the marker 70c and teaching of the marker transferring job have been already performed. Accordingly, as illustrated in Fig. 6, two processes of the process for mounting the calibration jig (in S01) and the process for instructing the robot controller 20 to perform the calibration (in S04) allow performing calibration.

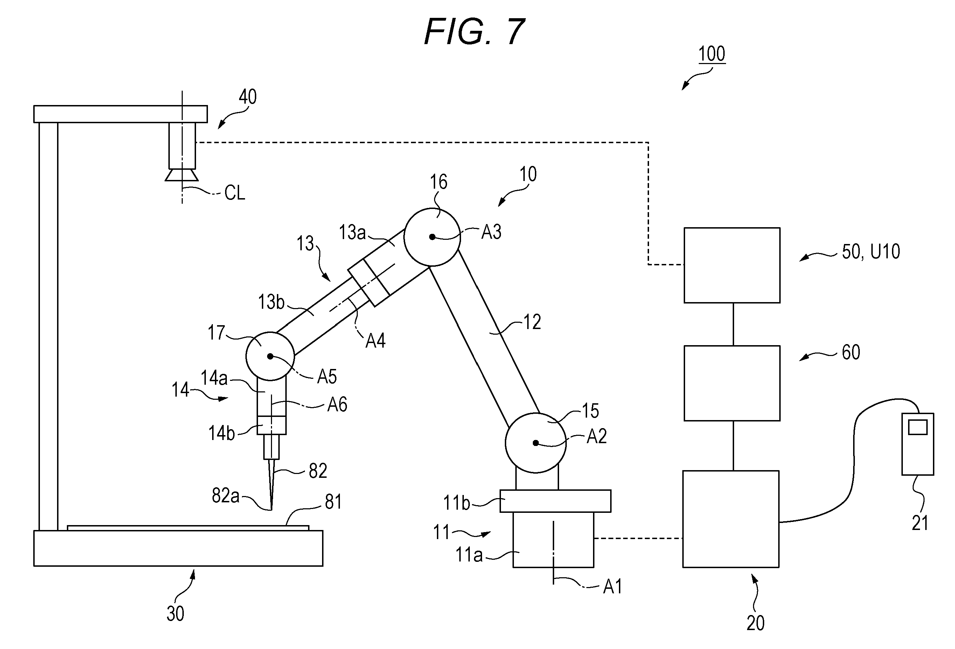

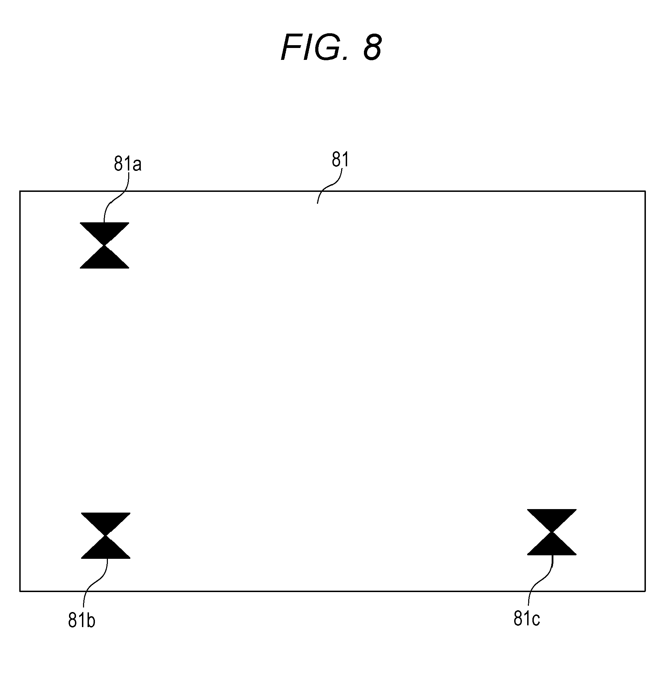

Here, a robot system 100 will be described as a comparison target. As illustrated in Fig. 7, the robot system 100 includes calibration jigs 81 and 82 instead of the calibration jig 70. The first calibration jig 81 is, for example, a sheet-shaped member to be mounted on the workbench 30. The first calibration jig 81 has the top surface on which three markers 81a, 81b, and 81c for image recognition are disposed (see Fig. 8). The second calibration jig 82 is, for example, a needle-like member to be mounted on the mounting flange 14b.

In the robot system 100, the camera controller 50 functions as calibration apparatus U10. The camera controller 50 as the calibration apparatus U10 acquires the camera coordinates and the robot coordinates in the plurality of points, and uses these coordinates to derive the correlation between the camera coordinates and the robot coordinates.

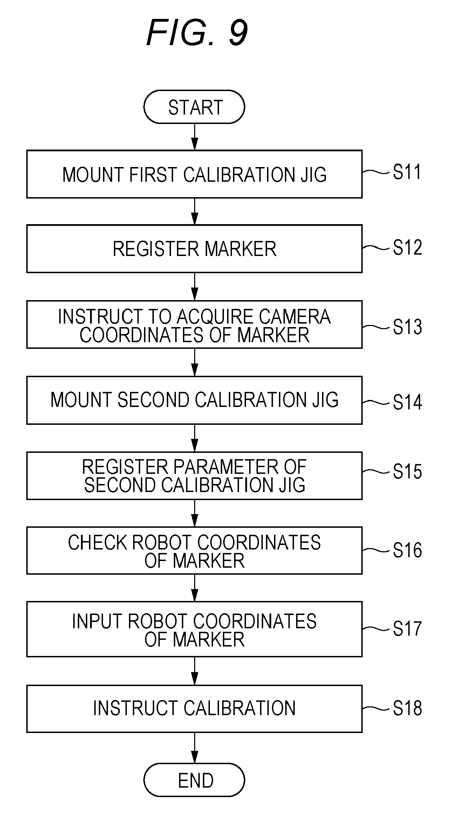

In the calibration of the robot system 100, as illustrated in Fig. 9, firstly, the user mounts the first calibration jig 81 on the workbench 30 (in S11) and registers the markers 81a, 81b, and 81c (in S12). That is, parameters for image recognition regarding the markers 81a, 81b, and 81c are registered. These parameters are stored (registered) on the camera controller 50.

Subsequently, the user uses the PP 21 to instruct the camera controller 50 as the calibration apparatus U10 to acquire the camera coordinates of the markers 81a, 81b, and 81c (in S13). The camera controller 50 acquires the images of the calibration jig 81 from the camera 40 and performs image processing to recognize the respective positions (coordinates) of the markers 81a, 81b, and 81c in the images. Accordingly, the camera coordinates of the markers 81a, 81b, and 81c are obtained.

Subsequently, the user mounts the second calibration jig 82 on the mounting flange 14b of the robot arm 10 (in S 14). Then, the user registers a parameter regarding the second calibration jig 82 (in S15). This parameter is a parameter for calculating robot coordinates of a tip portion 82a of the second calibration jig 82. This parameter is, for example, the flange coordinates of the tip portion 82a.

Subsequently, the robot coordinates of the markers 81a, 81b, and 81c are checked (in S16). Specifically, the user uses the PP 21 to indicate the markers 81a, 81b, and 81c using the tip portion 82a of the second calibration jig 82. Subsequently, the user checks the robot coordinates of the tip portion 82a at that time. The user inputs the checked robot coordinates to the camera controller 50 (in S17). Subsequently, the user instructs the camera controller 50 as the calibration apparatus U10 to execute calibration (in S18). Accordingly, the camera controller 50 executes calibration and derives the correlation between the camera coordinates and the robot coordinates.

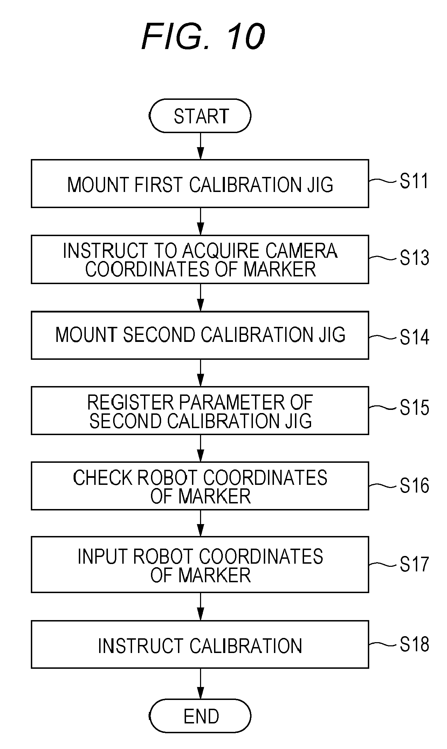

Thus, the robot system 100 performs both the work for acquiring the camera coordinates of the markers 81a, 81b, and 81c and the work for acquiring the robot coordinates of the markers 81a, 81b, and 81c. Accordingly, the work becomes complicated and the work time becomes long. Especially, for acquiring the robot coordinates, the complicated works are performed. For example, the parameters of the second calibration jig 82 are registered (in S15), the robot coordinates of the markers 81a, 81b, and 81c are checked (in S16), and the robot coordinates of the markers 81a, 81b, and 81c are input (in S17). When the calibration is performed again, as illustrated in Fig. 10, processes other than registration of the markers 81a, 81b, and 81c (in S12) are performed again.

In contrast, in the calibration of the robot system 1, the correlation between the camera coordinates and the robot coordinates is derived based on the camera coordinates of the marker 70c when the marker 70c is in the sample positions 31, 32, and 33 and the posture information of the robot arm 10 when the marker 70c is in the sample positions 31, 32, and 33. Accordingly, even when the robot coordinates of the marker 70c are unknown, the correlation between the camera coordinates and the robot coordinates can be calculated. Therefore, the process for acquiring the robot coordinates of the marker 70c can be omitted. This allows readily and quickly deriving the correlation between the camera coordinates and the robot coordinates.

Additionally, when the calibration is performed again, the two processes of the registration of the marker 70c (in S02) and the teaching of the marker transferring job (in S03). This allows more readily and quickly deriving the correlation between the camera coordinates and the robot coordinates.

The function as the calibration apparatus U1 is incorporated in the robot controller 20. Accordingly, the function of the calibration apparatus can be omitted from the camera controller 50. This allows employing a general-purpose image processing apparatus as the camera controller 50.

Further, the configuration of this embodiment is applicable to a robot system that directly couples the camera controller 50 and the robot controller 20 without involving the PLC 60.

(Second Embodiment)

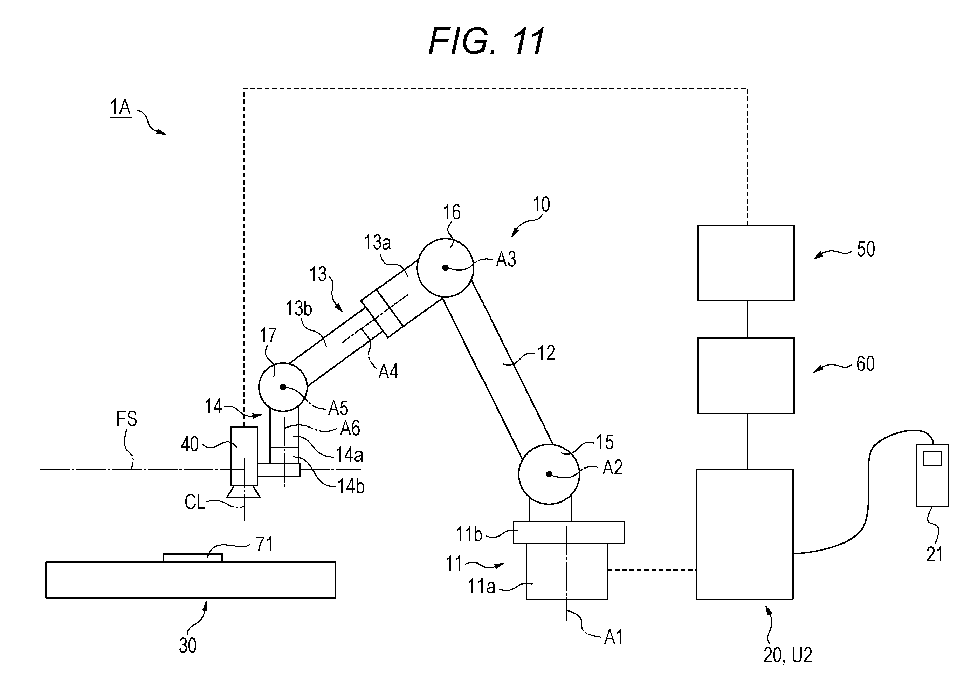

A robot system 1A according to a second embodiment differs from the robot system 1 in that the camera 40 is mounted on the mounting flange 14b together with various tools. As illustrated in Fig. 11, the robot system 1A includes a calibration jig 71 to be mounted on the workbench 30 instead of the calibration jig 70 to be mounted on the mounting flange 14b. On the calibration jig 71, the marker 70c is disposed (see Fig. 2).

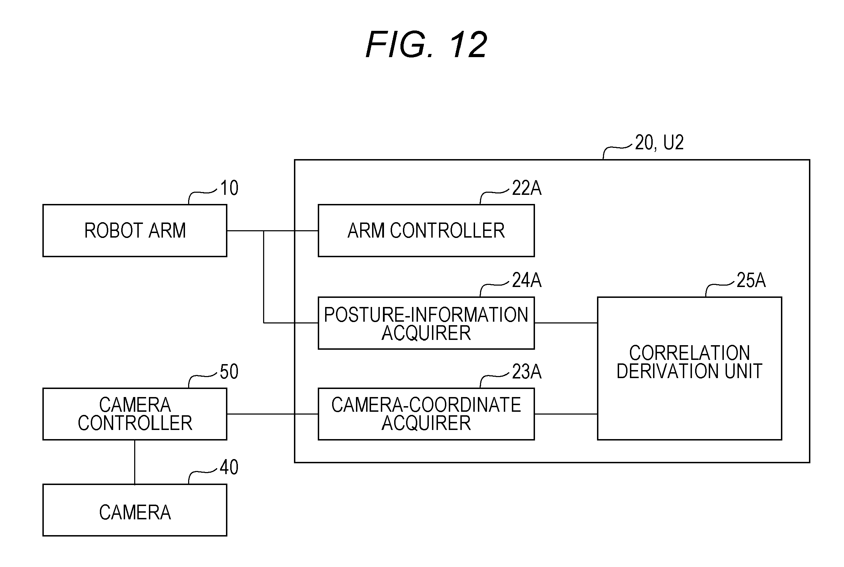

The calibration of the robot system 1A is executed by the robot controller 20 when the calibration jig 71 is mounted on the workbench 30. That is, the robot controller 20 functions as a calibration apparatus U2. As illustrated in Fig. 12, the robot controller 20 as the calibration apparatus U2 includes, as function blocks, an arm controller 22A, a camera-coordinate acquirer 23A, a posture-information acquirer 24A, and a correlation derivation unit 25A.

The arm controller 22A operates the robot arm 10 to move the camera 40 to a plurality of sample positions within the plane FS approximately perpendicular to the optical axis CL of the camera 40.

In this embodiment, the camera 40 photographs the marker 70c when the camera 40 is in the sample position. As described above, in this embodiment, there is a plurality of sample positions of the camera 40. Accordingly, there is also a plurality of photographing positions of the camera 40.

Here, the photographing position is a relative position of the camera 40 with respect to the marker 70c during photographing. In this embodiment, the camera 40 can be moved while the marker 70c is fixed. Accordingly, in this embodiment, the photographing position is determined corresponding to the sample position of the camera 40c.

The robot arm 10 changes its posture to move the camera 40. Accordingly, the robot arm 10 takes a posture corresponding to the relative position of the camera 40 with respect to the marker 70c.

The arm controller 22A controls the robot arm 10 to set the plurality of photographing positions by changing the relative position of the camera 40 with respect to the marker 70c. That is, in this embodiment, the arm controller 22A controls the robot arm 10 to move the marker 70c to the plurality of sample positions within the plane FS approximately perpendicular to the optical axis CL of the camera 40 in a state where the marker 70c faces the camera 40, thus setting the plurality of photographing positions.

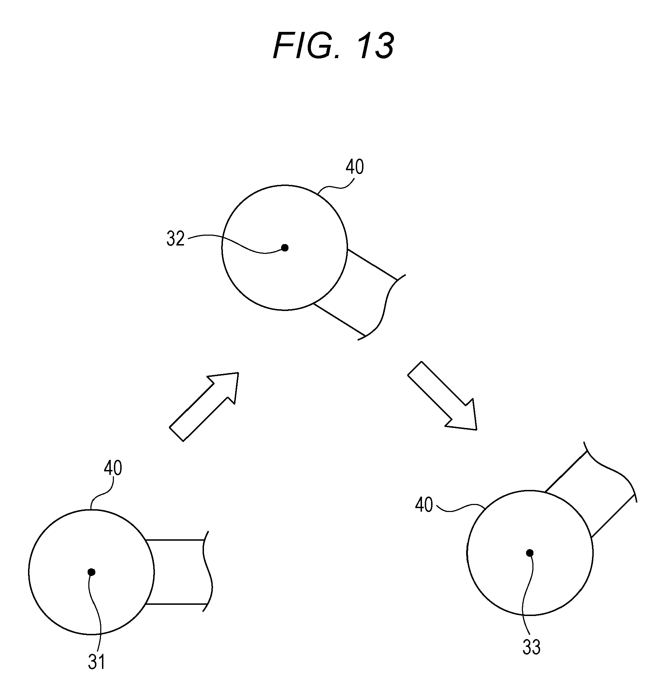

As illustrated in Fig. 13, the arm controller 22A employs, for example, three positions that are not arranged in a straight line as the sample positions 31, 32, and 33. The arm controller 22A controls the robot arm 10 to change the direction of the camera 40 along the rotation direction around the optical axis CL. For example, the arm controller 22A changes the direction of the camera 40 for each sample position when the marker 70c is in the sample positions 31, 32, and 33. This allows deriving the correlation between the camera coordinates and the robot coordinates with higher accuracy.

The camera-coordinate acquirer 23A requests the camera controller 50 to perform image processing when the camera 40 is in the sample positions 31, 32, and 33. The camera controller 50 acquires the images when the camera 40 is in the sample positions 31, 32, and 33 from the camera 40 and recognizes the position (coordinates) of the marker 70c in the image with image processing. Accordingly, the camera coordinates of the marker 70c are obtained. The camera-coordinate acquirer 23A acquires the camera coordinates obtained by the camera controller 50.

The posture-information acquirer 24A acquires the posture information of the robot arm 10 when the camera 40 is in the sample positions 31, 32, and 33. Specifically, angle information of the respective actuators of the robot arm 10 is acquired.

The correlation derivation unit 25A derives the correlation between the camera coordinates and the robot coordinates based on the camera coordinates acquired by the camera-coordinate acquirer 23A and the posture information acquired by the posture-information acquirer 24A. The calculation content will be described below. Here, a correlation between a movement distance of the marker 70c in the image photographed by the camera 40 and an actual movement distance of the camera 40 is assumed to be known. When the camera 40 is in the sample position "i", the correlation between the camera coordinates and the robot coordinates of the marker 70c is expressed by the following formula.

$$P = Pf + Rf \, (fPc + fRc \bullet cP) \, . \, . \, . \, (7)$$

P: robot coordinates.
fPc: flange coordinates of the camera coordinate origin (coordinates using the mounting flange 14b as a reference).
fRc: a rotation transformation matrix from the camera coordinates into the flange coordinates.
Pf: robot coordinates of the flange coordinate origin.
Rf: a rotation transformation matrix from the flange coordinates into the robot coordinates.
cP: camera coordinates.

Deriving the correlation between the camera coordinates and the robot coordinates corresponds to calculating fPc and fRc in the formula (7). When the camera is in the sample position "i", the following equation is satisfied based on the formula (7).

$$Pfi + Rfi \, (fPc + fRc \bullet cPmi) - Pm = 0 \, . \, . \, . \, (8)$$

Pfi: robot coordinates of the flange coordinate origin when the camera 40 is in the position "i".
Rfi: a rotation transformation matrix from the flange coordinates into the robot coordinates when the camera 40 is in the position "i".
cPmi: camera coordinates of the marker 70c when the camera 40 is in the position "i". Pm: robot coordinates of the marker 70c.
In the formula (8), unknown numbers are fPc, fRc, and Pm.

The camera 40 in three sample positions 31, 32, and 33 photographs the marker 70c and the parameters obtained by the photographing are assigned to the formula (8), so as to configure the following three simultaneous equations.

$$Pf31 + Rf31 \, (fPc + fRc \bullet cPm31) - Pm = 0 \, . \, . \, . \, (9)$$

$$Pf32 + Rf32 \, (fPc + fRc \bullet cPm32) - Pm = 0 \, . \, . \, . \, (10)$$

$$Pf33 + Rf33 \, (fPc + fRc \bullet cPm33) - Pm = 0 \, . \, . \, . \, (11)$$

With solution of this simultaneous equation, fPc, fRc and Pm are calculated.

8

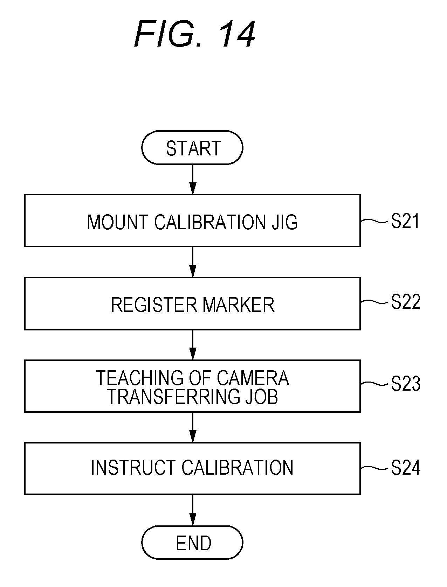

The calibration method of the robot system 1A will be described below. As illustrated in Fig. 14, firstly, the user mounts the calibration jig 71 on the workbench 30 (in S21). Subsequently, the user uses the PP 21 to register the marker 70c, similarly to step S02 described above (in S22).

Subsequently, the user uses the PP 21 to perform teaching of the camera transferring job (in S23). That is, the user sets a control target value when the arm controller 22A causes the robot arm 10 to perform an operation (a camera transferring job) that moves the camera 40 to the three sample positions 31, 32, and 33. This control target value is, for example, stored in the robot controller 20.

Subsequently, the user uses the PP 21 to instruct the robot controller 20 to execute calibration (in S24). Then, the robot controller 20 executes calibration. That is, the robot controller 20 (the correlation derivation unit 25) derives the correlation between the camera coordinates and the robot coordinates.

The calibration performed again in the case where the position of the camera 40 is misaligned or similar case is performed, similarly to the robot system 1, by two processes (in S21 and S24) other than registration of the marker 70c and teaching of the camera transferring job.

In the calibration of the robot system 1A, the correlation between the camera coordinates and the robot coordinates is derived based on the camera coordinates of the marker 70c when the camera 40 is in the sample positions 31, 32, and 33 and the posture information of the robot arm 10 when the camera 40 in the sample positions 31, 32, and 33. Accordingly, even when the robot coordinates of the marker 70c are unknown, the correlation between the camera coordinates and the robot coordinates can be calculated. Therefore, the process for acquiring the robot coordinates of the marker 70c can be omitted. Accordingly, similarly to the case of the robot system 1, this allows readily and quickly calculating the correlation between the camera coordinates and the robot coordinates.

The function as the calibration apparatus U2 is incorporated in the robot controller 20. Accordingly, the function of the calibration apparatus can be omitted from the camera controller 50. This allows employing a general-purpose image processing apparatus as the camera controller 50.

Additionally, the configuration of this embodiment is applicable to a robot system that directly couples the camera controller 50 and the robot controller 20 together without involving the PLC 60.

The preferred embodiments of this disclosure have been described above. This disclosure is not limited to the above-described embodiments. Various changes of this disclosure may be made without departing from the spirit and scope of this disclosure. For example, the functions as the calibration apparatuses U1 and U2 may be excluded from the robot controller 20. The functions as the calibration apparatuses U1 and U2 may be incorporated in the camera controller 50 or the PLC 60. Alternatively, all or any two of the robot controller 20, the camera controller 50, and the PLC 60 may collaborate with one another to achieve the functions as the calibration apparatuses U1 and U2.

Furthermore, the robot system according to one embodiment of this disclosure may be the following first to sixth robot systems.

The first robot system includes a robot arm, a camera for photographing a workpiece, a calibration jig with a marker that allows image recognition, and a calibration apparatus. The calibration jig is to be mounted on a tip portion of the robot arm. The calibration apparatus derives a correlation between camera coordinates and robot coordinates. The camera coordinates are coordinates in an image photographed by the camera. The robot coordinates are coordinates using the robot arm as a reference. The calibration apparatus includes an arm controller, a camera-coordinate acquirer, a posture-information acquirer, and a correlation derivation unit. The arm controller controls the robot arm to move the marker to a plurality of sample positions within a plane approximately perpendicular to an optical axis of the camera in a state where the marker faces the camera. The camera-coordinate acquirer acquires the camera coordinates of the marker when the marker is in the sample positions. The posture-information acquirer acquires posture information of the robot arm when the marker is in the sample positions. The correlation derivation unit derives the correlation between the camera coordinates and the robot coordinates based on the camera coordinates acquired by the camera-coordinate acquirer and the posture information acquired by the posture-information acquirer.

In the second robot system according to the first robot system, the sample positions include at least three positions that are not arranged in a straight line.

In the third robot system according to the first or second robot system, the arm controller controls the robot arm to change a direction of the calibration jig along a rotation direction around an axis approximately parallel to the optical axis of the camera when the marker is in the sample positions, for each sample position.

The fourth robot system includes a robot arm, a camera for photographing a workpiece, a calibration jig with a marker that allows image recognition, and a calibration apparatus. The camera is to be mounted on the robot arm. The calibration apparatus derives a correlation between camera coordinates and robot coordinates. The camera coordinates are coordinates in an image photographed by the camera. The robot coordinates are coordinates using the robot arm as a reference. The calibration apparatus includes an arm controller, a camera-coordinate acquirer, a posture-information acquirer, and a correlation derivation unit. The arm controller controls the robot arm to move the camera to a plurality of sample positions within a plane perpendicular to an optical axis of the camera in a state where the camera faces the marker. The camera-coordinate acquirer acquires the camera coordinates of the marker when the camera is in the sample positions. The posture-information acquirer acquires posture information of the robot arm when the camera is in the sample positions. The correlation derivation unit derives the correlation between the camera coordinates and the robot coordinates based on the camera coordinates and the posture information.

In the fifth robot system according to the fourth robot system, the sample positions includes at least three positions that are not arranged in a straight line.

In the sixth robot system according to the fourth or fifth robot system, the arm controller controls the robot arm to change a direction of the camera along a rotation direction around the optical axis of the camera when the camera is in the sample positions for each sample position.

The calibration method according to one embodiment of this disclosure may be the following first or second calibration method.

The first calibration method includes: mounting a calibration jig with a marker that allows image recognition on a tip portion of a robot arm; operating the robot arm to move the marker to a plurality of sample positions within a plane perpendicular to an optical axis of the camera in a state where the marker faces the camera; acquiring camera coordinates as coordinates in an image of the marker photographed by the camera when the marker is in the sample positions; acquiring information of a posture of the robot arm when the marker is in the sample positions; and deriving a correlation between the camera coordinates and robot coordinates that are coordinates using the robot arm as a reference based on the camera coordinates and the posture information.

The second calibration method includes: mounting a calibration jig with a marker that allows image recognition; operating a robot arm to move the camera to a plurality of sample positions within a plane perpendicular to an optical axis of the camera in a state where the camera faces the marker; acquiring camera coordinates as coordinates in an image of the marker photographed by the camera when the camera is in the sample positions; acquiring information of a posture of the robot arm when the camera is in the sample positions; and deriving a correlation between the camera coordinates and robot coordinates that are coordinates using the robot arm as a reference based on the camera coordinates and the posture information.

The robot system according to one embodiment of this disclosure may be the following seventh to twelfth robot systems.

The seventh robot system includes a robot arm, a camera to be mounted for photographing a workpiece, a calibration jig with a marker that allows image recognition, and a calibration apparatus. The calibration jig is to be mounted on a tip portion of the robot arm. The calibration apparatus derives a correlation between camera coordinates and robot coordinates. The camera coordinates are coordinates in an image photographed by the camera. The robot coordinates are coordinates using the robot arm as a reference. The calibration apparatus includes an arm controller, a camera-coordinate acquirer, a posture-information acquirer, and a correlation derivation unit. The arm controller controls the robot arm to move the marker to a plurality of sample positions within a plane perpendicular to an optical axis of the camera in a state where the marker faces the camera. The camera-coordinate acquirer acquires the camera coordinates of the marker when the marker is in the sample positions. The posture-information acquirer acquires posture information of the robot arm when the marker in the sample positions. The correlation derivation unit derives the correlation between the camera coordinates and the robot coordinates based on the camera coordinates and the posture information respectively acquired by the camera-coordinate acquirer and the posture-information acquirer.

In the eighth robot system according to the seventh robot system, the arm controller employs at least three positions that are not arranged in a straight line as the sample positions.

In the ninth robot system according to the seventh or eighth robot system, the arm controller controls the robot arm to change a direction of the calibration jig when the marker is in the sample positions along a rotation direction around an axis parallel to the optical axis of the camera for each sample position.

The tenth robot system includes a robot arm, a camera to be mounted on the robot arm for photographing a workpiece, a calibration jig with a marker that allows image recognition, and a calibration apparatus. The calibration apparatus derives a correlation between camera coordinates and robot coordinates. The camera coordinates are coordinates in an image photographed by the camera. The robot coordinates are coordinates using the robot arm as a reference. The calibration apparatus includes an arm controller, a camera-coordinate acquirer, a posture-information acquirer, and a correlation derivation unit. The arm controller controls the robot arm to move the camera to a plurality of sample positions within a plane perpendicular to an optical axis of the camera in a state where the camera faces the marker. The camera-coordinate acquirer acquires the camera coordinates of the marker when the camera is in the sample positions. The posture-information acquirer acquires posture information of the robot arm when the camera is in the sample positions. The correlation derivation unit derives the correlation between the camera coordinates and the robot coordinates based on the camera coordinates and the posture information respectively acquired by the camera-coordinate acquirer and the posture-information acquirer.

In the eleventh robot system according to the tenth robot system, the arm controller employs at least three positions that are not arranged in a straight line as the sample positions.

In the twelfth robot system according to the tenth or eleventh robot system, the arm controller controls the robot arm to change a direction of the camera when the camera is in the sample positions along a rotation direction around the optical axis of the camera for each sample position.

The calibration method according to one embodiment of this disclosure may be the following third or fourth calibration method.

The third calibration method is a method for deriving a correlation between camera coordinates and robot coordinates in a robot system that includes a robot arm and a camera to be mounted for image recognition of a workpiece. The camera coordinates are coordinates in an image photographed by the camera. The robot coordinates are coordinates using the robot arm as a reference. The third calibration method includes: mounting a calibration jig with a marker that allows image recognition on a tip portion of the robot arm; operating the robot arm to move the marker to a plurality of sample positions within a plane perpendicular to an optical axis of the camera in a state where the marker faces the camera; acquiring the camera coordinates of the marker when the marker is in the sample positions; acquiring posture information of the robot arm when the marker is in the sample positions; and deriving the correlation between the camera coordinates and the robot coordinates based on the acquired camera coordinates and posture information.

The fourth calibration method is a method for deriving a correlation between camera coordinates and robot coordinates in a robot system that includes a robot arm and a camera to be mounted on the robot arm for image recognition of a workpiece. The camera coordinates are coordinates in an image photographed by the camera. The robot coordinates are coordinates using the robot arm as a reference. The fourth calibration method includes: mounting a calibration jig with a marker that allows image recognition; operating the robot arm to move the camera to a plurality of sample positions within a plane perpendicular to an optical axis of the camera in a state where the camera faces the marker; acquiring the camera coordinates of the marker when the camera is in the sample positions; acquiring posture information of the robot arm when the camera is in the sample positions; and deriving the correlation between the camera coordinates and the robot coordinates based on the acquired camera coordinates and posture information.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A robot system (1, 1A), comprising
   a robot arm (10);
   a camera (40) configured to photograph a workpiece;
   a calibration jig (70, 71) with a marker (70c) that allows image recognition; and
   a calibration apparatus (U1, U2) configured to derive a correlation between camera coordinates and robot coordinates, the camera coordinates being coordinates in an image photographed by the camera, the robot coordinates being coordinates using the robot arm as a reference, wherein
   the robot arm is configured to have a posture corresponding to a relative position of the camera with respect to the marker,
   the calibration apparatus includes:

      an arm controller (22, 22A) configured to control the robot arm to change the relative position of the camera with respect to the marker, so as to set a plurality of photographing positions;
      a camera-coordinate acquirer (23, 23A) configured to acquire the camera coordinates of the marker to be obtained by photographing in the plurality of photographing positions;
      a posture-information acquirer (24, 24A) configured to acquire information of the posture of the robot arm when the marker is photographed by the camera in the plurality of photographing positions; and
      a correlation derivation unit (25, 25A) configured to derive the correlation between the camera coordinates and the robot coordinates based on the camera coordinates acquired by the camera-coordinate acquirer and the posture information acquired by the posture-information acquirer.

2. The robot system (1) according to claim 1, wherein
   the calibration jig (70) is mounted on a tip portion of the robot arm, and
   the arm controller (22) is configured to control the robot arm to move the marker to a plurality of sample positions within a plane approximately perpendicular to an optical axis of the camera in a state where the marker faces the camera, so as to set the plurality of photographing positions.

3. The robot system according to claim 2, wherein
the sample positions include at least three positions that are not arranged in a straight line.

4. The robot system according to claim 2 or 3, wherein
the arm controller is configured to control the robot arm to change a direction of the calibration jig along a rotation direction around an axis approximately parallel to the optical axis of the camera when the marker is in the sample positions for each photographing position.

5. The robot system (1A) according to claim 1, wherein
the camera is mounted on the robot arm, and
the arm controller (22A) is configured to control the robot arm to move the camera to a plurality of sample positions within a plane approximately perpendicular to an optical axis of the camera in a state where the camera faces the marker, so as to set the plurality of photographing positions.

6. The robot system according to claim 5, wherein
the sample positions include at least three positions that are not arranged in a straight line.

7. The robot system according to claim 5 or 6, wherein
the arm controller is configured to control the robot arm to change a direction of the camera along a rotation direction around the optical axis of the camera when the camera is in the sample positions, for each sample position.

8. A calibration method, comprising:

   setting a plurality of photographing positions by controlling a robot arm (10) in a posture corresponding to a relative position of a camera (40) with respect to a marker (70c) that is provided with a calibration jig (70, 71) and allows image recognition, so as to change the relative position of the camera with respect to the marker;
   acquiring camera coordinates of the marker as coordinates in an image photographed with the camera by photographing in the plurality of photographing positions;
   acquiring information of the posture of the robot arm when the marker is photographed with the camera in the plurality of photographing positions; and
   deriving a correlation between the camera coordinates and robot coordinates based on the camera coordinates and the posture information, the robot coordinates being coordinates using the robot arm as a reference.

9. The calibration method according to claim 8, further comprising
mounting the calibration jig on a tip portion of the robot arm, wherein
the setting of the plurality of photographing positions includes controlling the robot arm to move the marker to a plurality of sample positions within a plane approximately perpendicular to an optical axis of the camera in a state where the marker faces the camera.

10. The calibration method according to claim 8, further comprising
mounting the camera on the robot arm, wherein
the setting of the plurality of photographing positions includes controlling the robot arm to move the camera to a plurality of sample positions within a plane approximately perpendicular to an optical axis of the camera in a state where the camera faces the marker.

*FIG. 1*

EP 2 783 814 A2

13

# FIG. 2

70c        70, 71

# FIG. 3

20, U1

ARM CONTROLLER — 22

POSTURE-INFORMATION ACQUIRER — 24

CAMERA-COORDINATE ACQUIRER — 23

CORRELATION DERIVATION UNIT — 25

ROBOT ARM — 10

CAMERA CONTROLLER — 50

CAMERA — 40

# FIG. 4

## FIG. 5

START

MOUNT CALIBRATION JIG —— S01

REGISTER MARKER —— S02

TEACHING OF
MARKER TRANSFERRING JOB —— S03

INSTRUCT CALIBRATION —— S04

END

## FIG. 6

START

MOUNT CALIBRATION JIG —— S01

INSTRUCT CALIBRATION —— S04

END

# FIG. 7

EP 2 783 814 A2

## FIG. 8

# FIG. 9

START

↓

| MOUNT FIRST CALIBRATION JIG | S11 |

↓

| REGISTER MARKER | S12 |

↓

| INSTRUCT TO ACQUIRE CAMERA COORDINATES OF MARKER | S13 |

↓

| MOUNT SECOND CALIBRATION JIG | S14 |

↓

| REGISTER PARAMETER OF SECOND CALIBRATION JIG | S15 |

↓

| CHECK ROBOT COORDINATES OF MARKER | S16 |

↓

| INPUT ROBOT COORDINATES OF MARKER | S17 |

↓

| INSTRUCT CALIBRATION | S18 |

↓

END

# FIG. 10

```
          ┌─────────┐
          │  START  │
          └─────────┘
               │
               ▼
┌─────────────────────────────────┐
│   MOUNT FIRST CALIBRATION JIG   │ ──S11
└─────────────────────────────────┘
               │
               ▼
┌─────────────────────────────────┐
│   INSTRUCT TO ACQUIRE CAMERA    │ ──S13
│     COORDINATES OF MARKER       │
└─────────────────────────────────┘
               │
               ▼
┌─────────────────────────────────┐
│   MOUNT SECOND CALIBRATION JIG  │ ──S14
└─────────────────────────────────┘
               │
               ▼
┌─────────────────────────────────┐
│      REGISTER PARAMETER OF      │ ──S15
│     SECOND CALIBRATION JIG      │
└─────────────────────────────────┘
               │
               ▼
┌─────────────────────────────────┐
│     CHECK ROBOT COORDINATES     │ ──S16
│          OF MARKER              │
└─────────────────────────────────┘
               │
               ▼
┌─────────────────────────────────┐
│     INPUT ROBOT COORDINATES     │ ──S17
│          OF MARKER              │
└─────────────────────────────────┘
               │
               ▼
┌─────────────────────────────────┐
│      INSTRUCT CALIBRATION       │ ──S18
└─────────────────────────────────┘
               │
               ▼
          ┌─────────┐
          │   END   │
          └─────────┘
```

FIG. 11

FIG. 12

# FIG. 13

# FIG. 14

```
         ┌─────────────┐
         │   START     │
         └──────┬──────┘
                │
                ▼
┌───────────────────────────────┐
│     MOUNT CALIBRATION JIG      │──── S21
└───────────────┬───────────────┘
                │
                ▼
┌───────────────────────────────┐
│       REGISTER MARKER          │──── S22
└───────────────┬───────────────┘
                │
                ▼
┌───────────────────────────────┐
│     TEACHING OF CAMERA         │──── S23
│      TRANSFERRING JOB          │
└───────────────┬───────────────┘
                │
                ▼
┌───────────────────────────────┐
│     INSTRUCT CALIBRATION       │──── S24
└───────────────┬───────────────┘
                │
                ▼
         ┌─────────────┐
         │    END      │
         └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010243317 A